# EUROPEAN PATENT APPLICATION

(11) **EP 4 332 073 A1**
(43) Date of publication of application: **06.03.2024**
(21) Application number: 22795759.4
(22) Date of filing: 26.04.2022
(51) Int. Cl.: C04B 35/80, B32B 15/04, C04B 41/88, F27D 3/12, F27D 5/00

(54) **HEAT RESISTANT STRUCTURE AND MEMBER FOR HEAT TREATMENT FURNACE**

(30) Priority: 28.04.2021 JP 2021076317
(71) Applicant: Ohwada Carbon Industrial Co., Ltd., Toyonaka-shi, Osaka 561-0821 (JP); Toyo Tanso Co., Ltd., Osaka-shi Osaka 555-0011 (JP)
(72) Inventor: OKASHITA, Hiromichi, Toyonaka-shi, Osaka 561-0821 (JP); TADA, Takayuki, Toyonaka-shi, Osaka 561-0821 (JP); MACHINO, Hiroshi, Osaka-shi, Osaka 555-0011 (JP); HIRAOKA, Toshiharu, Osaka-shi, Osaka 555-0011 (JP); MURAKI, Yasunori, Toyonaka-shi, Osaka 561-0821 (JP); KAJI, Masaru, Toyonaka-shi, Osaka 561-0821 (JP)
(74) Representative: TBK
(86) International application number: PCT/JP2022/018809
(87) International publication number: WO 2022/230846

(57) **Abstract**

Provided is a heat resistant structure easily producible, excellent in mechanical properties under high-temperature environment, and less thermally deformable. A heat resistant structure 1 includes: a core 2 formed of a plurality of C/C composite members 4; and a shell material 3 covering at least a portion of a surface 2a of the core 2 and made of metal.

## Description

### Technical Field

The present invention relates to heat resistant structures and members for heat treatment furnaces using the heat resistant structures.

### Background Art

Metallic materials have heretofore been widely used for members for heat treatment furnaces. However, metallic bars are heavy in weight and have a problem of susceptibility to thermal deformation in use at high temperatures. Therefore, rework for remedying a deformed bar is necessary after use. To cope with this, consideration is being given to, as an alternative to such a metallic bar, a bar in which a carbon fiber-reinforced carbon composite material (C/C composite) is disposed within a metallic pipe.

For example, Patent Literature 1 below discloses a heat-resistant structural member made of a heat-resistant metallic material and a carbon/carbon material. Patent Literature 1 describes that the heat-resistant metallic material forms an outer shell structure and the carbon/carbon material forms a core member enclosed within the outer shell structure. Patent Literature 1 also describes that the heat-resistant structural member has a feature that helium gas is encapsulated in the outer shell structure. Furthermore, Patent Literature 2 below describes that a structure similar to that in Patent Literature 1 has a feature that a reductant for reducing at least water and/or carbon oxides is encapsulated in the outer shell structure.

### Citation List

### Patent Literature

Patent Literature 1: JP-A-2018-39708
Patent Literature 2: JP-A-2017-77998

### Summary of Invention

### Technical Problem

However, members with a C/C composite disposed within a metallic pipe, in many cases, need a C/C composite having a large thickness. C/C composites have a problem that as the thickness increases, they are more difficult to produce and therefore decrease productivity. In addition, a thick C/C composite has a problem of increase in production cost. Furthermore, small-thickness offcuts remaining after the production of a thick C/C composite need to be discarded, which raises environmental concerns.

An object of the present invention is to provide a heat resistant structure easily producible, excellent in mechanical properties under high-temperature environment, and less thermally deformable and a member for a heat treatment furnace using the heat resistant structure.

### Solution to Problem

A heat resistant structure according to the present invention includes: a core formed of a plurality of C/C composite members; and a shell material covering at least a portion of a surface of the core and made of metal.

In the present invention, the core is preferably a layered material comprising the plurality of C/C composite members.

In the present invention, the C/C composite member preferably has an approximately rectangular sheet-like shape.

In the present invention, the C/C composite member is preferably a two-dimensional C/C composite member.

In the present invention, the C/C composite member is preferably disposed so that, in terms of application of a load to the heat resistant structure, a direction of extension of a longest side of a cross section of the C/C composite member taken along a widthwise direction thereof is substantially the same direction as a direction of the application of the load.

In the present invention, the plurality of C/C composite members are preferably layered, in terms of application of a load to the heat resistant structure, in a direction approximately orthogonal to a direction of the application of the load.

In the present invention, it is preferred that the shell material is a pipe made of metal and the plurality of C/C composite members are filled in the pipe.

In the present invention, the pipe preferably has an approximately polygonal cross-sectional shape.

In the present invention, the pipe may have an approximately circular cross-sectional shape.

In the present invention, the pipe preferably has a thickness of not less than 0.1 mm and not more than 3 mm.

In the present invention, a filling rate of the C/C composite members in the pipe is preferably 70% or more.

In the present invention, the shell material preferably partly covers the surface of the core.

In the present invention, the heat resistant structure is preferably used under a non-oxidizing atmosphere.

A member for a heat treatment furnace according to the present invention includes the heat resistant structure structured according to the present invention.

### Advantageous Effects of Invention

The present invention enables provision of a heat resistant structure easily producible, excellent in mechanical properties under high-temperature environment, and less thermally deformable and a member for a heat treatment furnace using the heat resistant structure. In addition, it is possible to pay attention to the global environment with the use of small-thickness offcuts.

### Brief Description of Drawings

[Fig. 1]

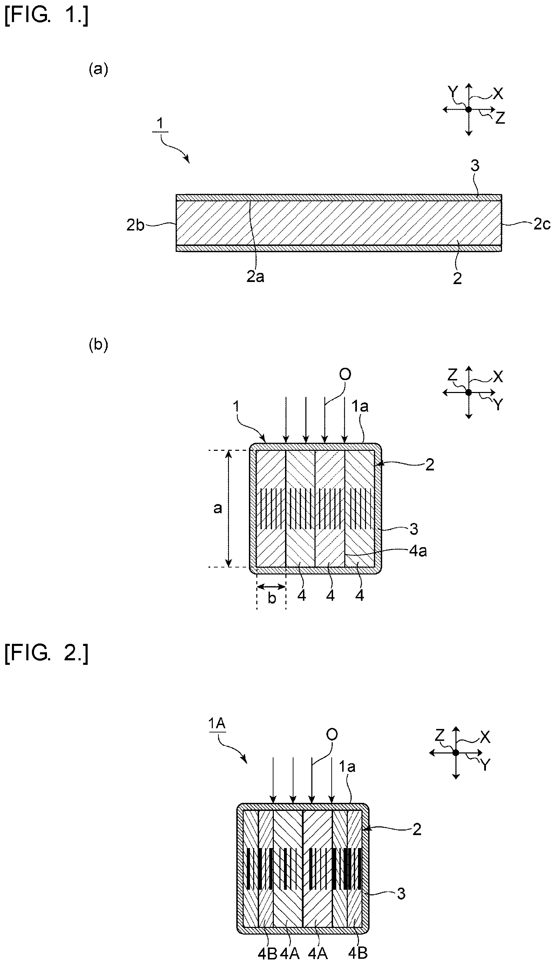

   Fig. 1(a) is a schematic cross-sectional view along a lengthwise direction of a heat resistant structure according to a first embodiment of the present invention and Fig. 1 (b) is a schematic cross-sectional view along a widthwise direction of the heat resistant structure according to the first embodiment of the present invention.
[Fig. 2]
   Fig. 2 is a schematic cross-sectional view along a widthwise direction of a heat resistant structure according to a first modification of the first embodiment of the present invention.
[Fig. 3]

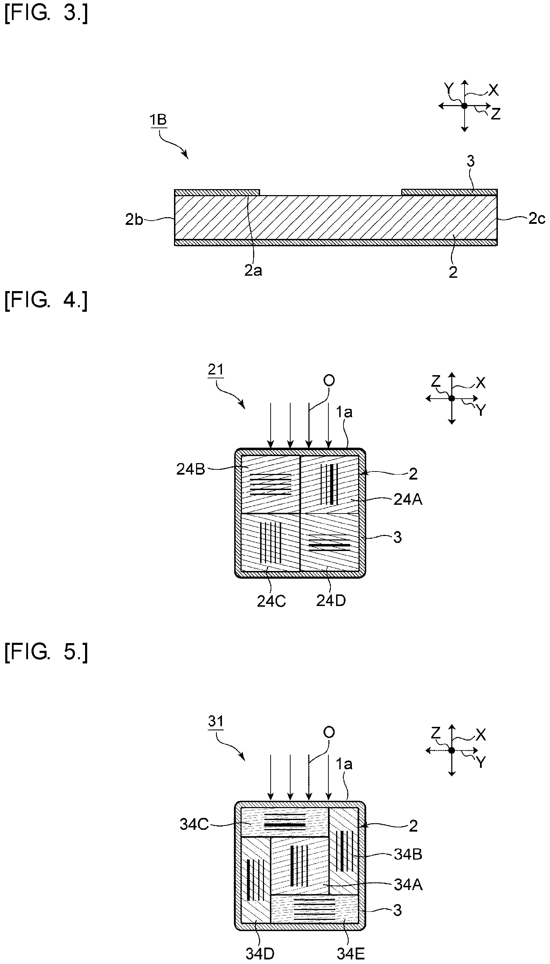

   Fig. 3 is a schematic cross-sectional view along a lengthwise direction of a heat resistant structure according to a second modification of the first embodiment of the present invention.
[Fig. 4]
   Fig. 4 is a schematic cross-sectional view along a widthwise direction of a heat resistant structure according to a second embodiment of the present invention.
[Fig. 5]
   Fig. 5 is a schematic cross-sectional view along a widthwise direction of a heat resistant structure according to a third embodiment of the present invention.
[Fig. 6]

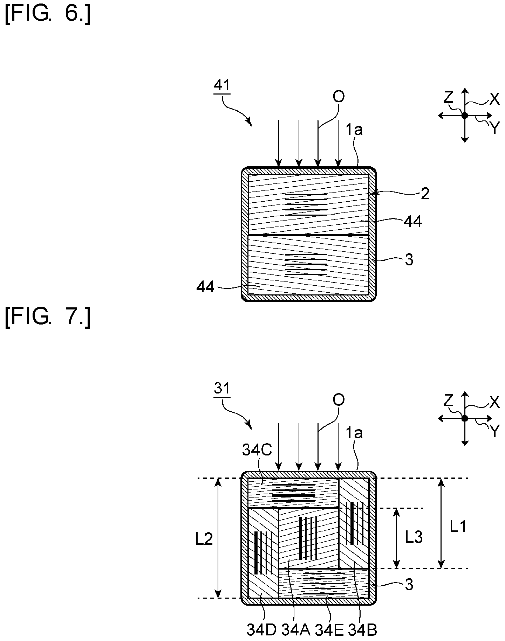

   Fig. 6 is a schematic cross-sectional view along a widthwise direction of a heat resistant structure according to a fourth embodiment of the present invention.
[Fig. 7]
   Fig. 7 is a view for illustrating the lengths L1 and L2 of the heat resistant structure according to the third embodiment of the present invention.
[Fig. 8]

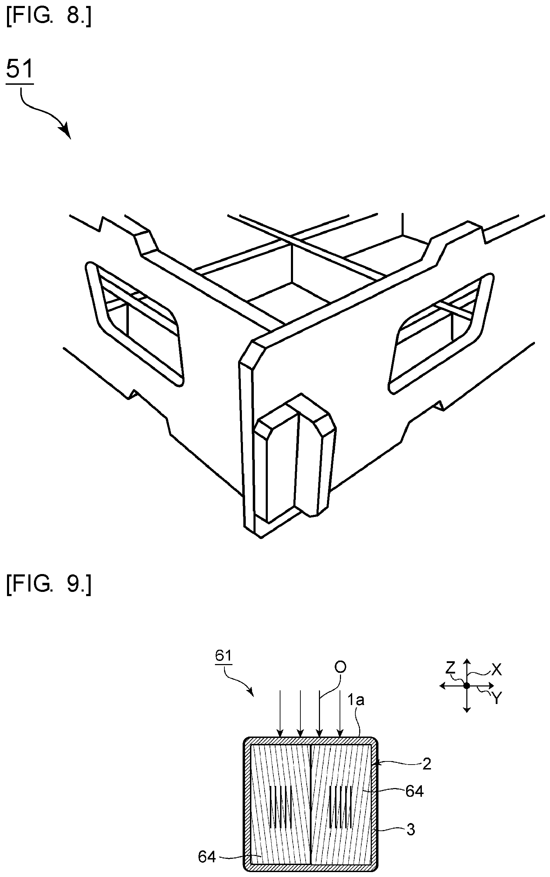

   Fig. 8 is a schematic perspective view showing a heat resistant structure according to a fifth embodiment of the present invention.
[Fig. 9]
   Fig. 9 is a schematic cross-sectional view along a widthwise direction of a heat resistant structure produced in Example 1.
[Fig. 10]

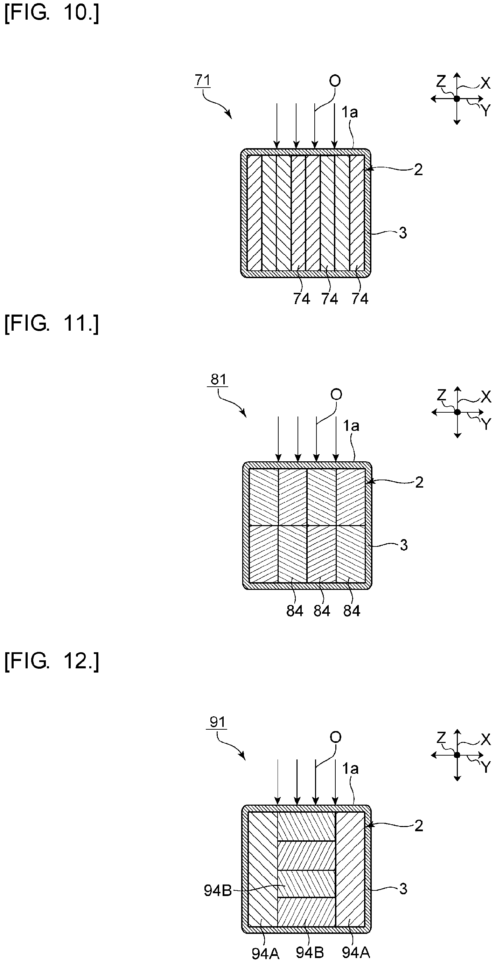

   Fig. 10 is a schematic cross-sectional view along a widthwise direction of a heat resistant structure produced in Example 4.
[Fig. 11]
   Fig. 11 is a schematic cross-sectional view along a widthwise direction of a heat resistant structure produced in Example 8.
[Fig. 12]
   Fig. 12 is a schematic cross-sectional view along a widthwise direction of a heat resistant structure produced in Example 9.
[Fig. 13]

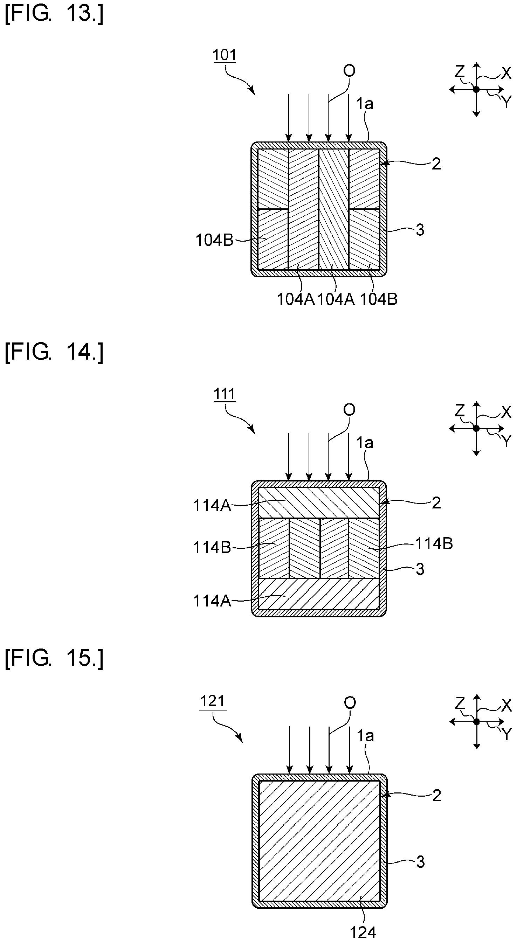

   Fig. 13 is a schematic cross-sectional view along a widthwise direction of a heat resistant structure produced in Example 10.
[Fig. 14]
   Fig. 14 is a schematic cross-sectional view along a widthwise direction of a heat resistant structure produced in Example 11.
[Fig. 15]
   Fig. 15 is a schematic cross-sectional view along a widthwise direction of a heat resistant structure produced in Reference Example 1.

### Description of Embodiments

Hereinafter, a description will be given of details of the present invention.

### (First Embodiment)

Fig. 1(a) is a schematic cross-sectional view along a lengthwise direction of a heat resistant structure according to a first embodiment of the present invention. Fig. 1(b) is a schematic cross-sectional view along a widthwise direction of the heat resistant structure according to the first embodiment of the present invention. The lengthwise direction of the heat resistant structure 1 refers to the direction Z shown in Figs. 1(a) and 1(b). The widthwise direction of the heat resistant structure 1 refers to the direction Y shown in Figs. 1(a) and 1(b).

As shown in Figs. 1(a) and 1(b), the heat resistant structure 1 includes a core 2 and a shell material 3. The shell material 3 convers the surface 2a of the core 2.

In this embodiment, the shell material 3 is a metallic pipe. The interior of this shell material 3 is filled with the core 2 formed of four C/C composite members 4. Thus, in this embodiment, the heat resistant structure 1 serving as a bar for a heat treatment furnace is formed. The term "C/C composite" refers to a carbon fiber-reinforced carbon composite material. In this embodiment, a two-dimensional C/C composite (2D-C/C composite) member having a two-dimensional structure is used as the C/C composite member 4.

In this embodiment, suppose that in applying a load to the heat resistant structure 1, the load is applied from the direction of the arrow O shown in Fig. 1(b) . Therefore, in this embodiment, the direction of application of the load is the direction X shown in Figs. 1(a) and 1(b).

As shown in Fig. 1(b), each of the C/C composite members 4 forming the core 2 has an approximately rectangular sheet-like shape. Furthermore, each of the C/C composite members 4 is disposed so that the direction of extension of a longest side 4a of a cross section of the C/C composite member 4 taken along a widthwise direction Y thereof is substantially the same direction as the direction X of the application of the load. In this embodiment, each of the C/C composite members 4 is disposed so that the direction of fibers of the C/C composite member 4 is also substantially the same direction as the direction X of the application of the load.

In this embodiment, the C/C composite members 4 are layered along the direction Y approximately orthogonal to the direction X of the application of the load. Thus, in this embodiment, the core 2 is formed. As used herein, the term "substantially the same direction" includes not only the perfectly same direction but also a range of directions inclined by ±5° with respect to the same direction. The term "direction approximately orthogonal" includes not only the perfectly orthogonal direction but also a range of directions inclined by ±5° with respect to the orthogonal direction.

Since, in the heat resistant structure 1 according to this embodiment, the core 2 formed of the C/C composite members 4 is provided within the shell material 3 being a metallic pipe as described above, the heat resistant structure 1 can be increased in mechanical properties under high-temperature environment and can be less susceptible to thermal deformation. Furthermore, since a plurality of C/C composite members 4 can be disposed within the shell material 3, the thickness of each C/C composite member 4 can be reduced. The heat resistant structure 1 can be produced simply by disposing a plurality of these C/C composite members 4 within the shell material 3. Therefore, the heat resistant structure 1 is easily producible and can increase the productivity. In addition, since small-thickness C/C composite members 4 can be used, the production cost can be reduced.

In this embodiment, the cross-sectional shape of the metallic pipe forming the shell material 3 is approximately square. However, the cross-sectional shape of the shell material 3 is not particularly limited and may be approximately polygonal or approximately circular. Particularly, the cross-sectional shape of the metallic pipe is preferably an approximately rectangular shape including a rectangular shape. In this case, the filling rate of C/C composite members 4 can be further increased.

The thickness of the shell material 3 is not particularly limited, but is preferably not less than 0.1 mm and preferably not more than 3 mm. When the thickness of the shell material 3 is within the above range, the wear resistance against other members made of metals can be increased further.

The material for the shell material 3 is not particularly limited and, for example, SUS can be used. Alternatively, a metallic material less reactive with SUS and carbon and that are used for heat treatment may be used. The type of the metallic material as just described is not particularly limited and, for example, STKMR (steel square tubes for machine structural purposes) or STPG (carbon steel pipes for pressure service) can be used.

In the heat resistant structure 1 according to this embodiment, four C/C composite members 4 are disposed within the shell material 3. However, the number of C/C composite members 4 to be disposed within the shell material 3 is not particularly limited and can be appropriately determined according to the thickness of the C/C composite member 4.

The number of C/C composite members 4 to be disposed within the shell material 3 may be preferably not less than two, more preferably not less than three, preferably not more than six, and more preferably not more than five.

The filling rate of the C/C composite members 4 to be disposed within the shell material 3 is preferably 70% or more, more preferably 80% or more, and still more preferably 90% or more. In this case, the mechanical properties under high-temperature environment can be further increased and thermal deformation can be even less likely to occur. The filling rate of the C/C composite members 4 to be disposed within the shell material 3 may be 100%.

In the heat resistant structure 1 according to this embodiment, as shown in Fig. 1(b), the thicknesses b of the C/C composite members 4 are equal to each other. The thickness b of the C/C composite member 4 is not particularly limited, but may be, for example, not less than 0.5 mm and not more than 12 mm.

However, as in a heat resistant structure 1A according to a first modification shown in Fig. 2, C/C composite members 4A and 4B may have different thicknesses. In the first modification shown in Fig. 2, two C/C composite members 4A closer to the center have a larger thickness than four C/C composite members 4B closer to both ends.

In the heat resistant structure 1 according to this embodiment, as shown in Fig. 1(a), the surface 2a of the core 2 along the lengthwise direction Z thereof is entirely covered with the shell material 3. On the other hand, end surfaces 2b and 2c thereof are not covered with the shell material 3. Therefore, generated air is escaped to the outside, which enables further reduction in likelihood of rupture or the like.

Alternatively, as in a heat resistant structure 1B according to a second modification shown in Fig. 3, the shell material 3 may be partly cut away and the shell material 3 may be disposed only on abradable portions. In this case, the heat resistant structure 1B can be further reduced in weight.

In the heat resistant structure 1 according to this embodiment, a principal surface 1a thereof to which a load is to be applied may be marked. An alternative method for distinguishing from the other surfaces the principal surface 1a to which a load is to be applied may be accomplished by piercing, tailoring of the direction of a welded portion, working on the metallic pipe and C/C composite members 4 or marking on them. In this case, the direction of use can be further clarified and the workability can be further increased.

As for the heat resistant structure 1 according to this embodiment, commercially available C/C composite members 4 can be used as the C/C composite members 4 forming the core 2. Alternatively, C/C composite members 4 produced in the following manner may be used.

Specifically, first, carbon fibers are impregnated with a thermosetting resin composition and then molded, thus obtaining a molded body.

Examples of the carbon fibers that can be used include polyacrylonitrile-based carbon fibers (PAN-based carbon fibers) and pitch-based carbon fibers. The carbon fibers used are preferably two-dimensionally aligned carbon fibers to form a 2D-C/C composite. The thermosetting resin composition may be composed only of a thermosetting resin or may contain a thermosetting resin and any additive. The thermosetting resin composition may contain a pitch. The molded body is preferably a body molded by pultrusion molding. In this case, the carbon fibers can be more easily unidirectionally aligned and, therefore, a molded body having a higher carbon fiber volume content can be obtained. The shape of the molded body is not particularly limited, but may be, for example, a flat-sheet shape, a square-bar shape or a round-bar shape.

The 2D-C/C composite may be obtained by aligning prepregs containing carbon fiber tows impregnated with a thermosetting resin, such as phenolic resin, and molding the prepregs in a mold.

Next, the molded body is fired to carbonize the thermosetting resin composition, thus obtaining a 2D-C/C composite.

Normally, the firing step is preferably performed under a non-oxidizing atmosphere, such as a nitrogen gas atmosphere, in order to prevent the 2D-C/C composite during production from being oxidized.

The firing temperature is not particularly limited, but may be, for example, not lower than 700°C and not higher than 1300°C. The firing time is not particularly limited, but the maximum temperature retention time may be, for example, not less than 30 minutes and not more than 600 minutes.

In order to obtain a denser 2D-C/C composite, a cycle of impregnation with a pitch and firing may be repeatedly performed. The pitch impregnation/firing step can be performed, for example, in a range of once to ten times.

In the present invention, the production method may further include a densifying step of densifying at least part of open pores in the 2D-C/C composite. In this case, oil penetration and oxidative consumption can be further reduced.

An example of the densifying step that can be used is the step of impregnating the open pores in the 2D-C/C composite with a pitch or a thermosetting resin and carbonizing the pitch or thermosetting resin.

The densifying step may be the step of subjecting the 2D-C/C composite to a CVI process.

The densifying step may be the step of impregnating the open pores in the 2D-C/C composite with molten silicon and converting the silicon to silicon carbide.

Alternatively, the densifying step may be the step of impregnating the open pores in the 2D-C/C composite with aluminum phosphate and thermally treating the 2D-C/C composite.

These densifying steps may be used singly or in combination of two or more of them.

### (Second to Fourth Embodiments)

Fig. 4 is a schematic cross-sectional view along a widthwise direction of a heat resistant structure according to a second embodiment of the present invention. As shown in Fig. 4, also in a heat resistant structure 21, four C/C composite members 24A to 24D are disposed within a shell material 3. The C/C composite members 24A to 24D are equal in size and their cross-sectional shapes are approximately square. The 2D-C/C composite members 24A and 24C the direction of fibers of which is substantially the same direction as the direction X of application of a load are arranged adjacent to the 2D-C/C composite members 24B and 24D, respectively, the direction of fibers of which is the direction Y approximately orthogonal to the direction X of application of a load. As for the rest, this embodiment is designed in the same way as the first embodiment.

Fig. 5 is a schematic cross-sectional view along a widthwise direction of a heat resistant structure according to a third embodiment of the present invention.

As shown in Fig. 5, in a heat resistant structure 31, five C/C composite members 34A to 34E are disposed within a shell material 3. In the heat resistant structure 31, when viewed in cross section, four C/C composite members 34B to 34E of an approximately rectangular shape are arranged to surround a single C/C composite member 34A of an approximately square shape. Furthermore, the C/C composite members 34B and 34D, in which the direction of extension of the longest side and the direction of fibers are substantially the same direction as the direction X of application of a load, are arranged adjacent to the C/C composite members 34C and 34E, respectively, in which the direction of extension of the longest side and the direction of fibers are the direction Y approximately orthogonal to the direction X of application of a load. As for the rest, this embodiment is designed in the same way as the first embodiment.

Fig. 6 is a schematic cross-sectional view along a widthwise direction of a heat resistant structure according to a fourth embodiment of the present invention.

As shown in Fig. 6, in a heat resistant structure 41, two C/C composite members 44 are disposed within a shell material 3. In the heat resistant structure 41, each C/C composite member 44 is disposed so that the direction of extension of the longest side and the direction of fibers are the direction Y approximately orthogonal to the direction X of application of a load. As for the rest, this embodiment is designed in the same way as the first embodiment.

As seen from the second to fourth embodiments, the locations of the C/C composite members within the shell material are not particularly limited in the present invention. In any of these cases, a core formed of C/C composite members is provided within a shell material being a metallic pipe. Therefore, the heat resistant structure can be increased in mechanical properties under high-temperature environment and can be less susceptible to thermal deformation. Furthermore, since a plurality of C/C composite members can be disposed within the shell material, the thickness of each C/C composite member can be reduced. The heat resistant structure can be produced simply by disposing a plurality of these C/C composite members within the shell material. Therefore, the heat resistant structure is easily producible and can increase the productivity. In addition, since small-thickness C/C composite members can be used, the production cost can be reduced.

Nevertheless, in the present invention, as shown, for example, in Fig. 1(b), each C/C composite member is preferably disposed so that the direction of extension of the longest side a is substantially the same direction as the direction X of application of a load. In this case, the heat resistant structure 1 can be further increased in mechanical properties under high-temperature environment and can be even less susceptible to thermal deformation.

When the cross-sectional shape of the heat resistant structure is approximately rectangular, as shown in Fig. 7, the ratio (L1/L2) between the length L1 of the C/C composite members 34A to 34E along the direction X of application of a load and the length L2 of the inner periphery of the shell material 3 along the direction X of application of a load is preferably 0.5 or more, more preferably 0.75 or more, and still more preferably 1. In this case, the heat resistant structure 31 can be further increased in mechanical properties under high-temperature environment and can be even less susceptible to thermal deformation. The length L1 refers to the length of, among the five C/C composite members 34A to 34E forming the heat resistant structure 31, the C/C composite members 34B and 34D having a longest length along the direction X of application of a load. For example, the ratio (L1/L2) in the first embodiment shown in Figs. 1(a) and 1(b) is 1, whereas the ratio (L1/L2) in the second embodiment shown in Fig. 4 is 0.5.

In plan view, the ratio (S1/S2) between the area S1 where the C/C composite members 34B and 34D having the length L1 are disposed and the entire area S2 of the principal surface 1a bearing a load is preferably 0.5 or more, more preferably 0.75 or more, and still more preferably 1. In this case, the heat resistant structure 31 can be further increased in mechanical properties under high-temperature environment and can be even less susceptible to thermal deformation.

When, as shown in Fig. 7, the heat resistant structure includes the C/C composite member 34A having a second longest length along the direction X of application of a load and the length of the C/C composite member 34A is defined as L3, the ratio (L3/L2) is preferably not less than 0.25, more preferably not less than 0.5, and preferably not more than 0.75. In this case, the heat resistant structure 31 can be further increased in mechanical properties under high-temperature environment and can be even less susceptible to thermal deformation.

In plan view, the ratio (S3/S2) between the area S3 where the C/C composite member 34A having the length L3 is disposed and the entire area S2 of the principal surface 1a bearing a load is preferably not less than 0.5 and preferably not more than 1. In this case, the heat resistant structure 31 can be further increased in mechanical properties under high-temperature environment and can be even less susceptible to thermal deformation.

When, as in the second embodiment shown in Fig. 4, the ratio (L1/L2) is relatively small, the C/C composite members 24A to 24D may be bonded together by adhesive, pinning, screw clamp or other methods. Alternatively, both ends of each of the C/C composite members 24A to 24D may be fixed by welding both ends of the shell material 3 without fully sealing them. In this case, the heat resistant structure 21 can be further increased in mechanical properties under high-temperature environment and can be even less susceptible to thermal deformation.

### (Fifth Embodiment)

Fig. 8 is a schematic perspective view showing a heat resistant structure according to a fifth embodiment of the present invention. As shown in Fig. 8, a heat resistant structure 51 is a basket for a heat treatment furnace. Like the heat resistant structure 1 according to the first embodiment, the heat resistant structure 51 is structured so that the interior of a shell material 3 is filled with a core 2 formed of four C/C composite members 4.

Also in the heat resistant structure 51, a core formed of C/C composite members is provided within a shell material being a metallic pipe. Therefore, the heat resistant structure 51 can be increased in mechanical properties under high-temperature environment and can be less susceptible to thermal deformation. Furthermore, since a plurality of C/C composite members can be disposed within the shell material, the thickness of each C/C composite member can be reduced. The heat resistant structure 51 can be produced simply by disposing a plurality of these C/C composite members within the shell material. Therefore, the heat resistant structure 51 is easily producible and can increase the productivity. In addition, since small-thickness C/C composite members can be used, the production cost can be reduced.

As seen from the above, the heat resistant structure according to the present invention can be suitably used as a member for a heat treatment furnace, such as a bar for a heat treatment furnace, a tray for a heat treatment furnace or a basket for a heat treatment furnace.

Next, the present invention will be demonstrated with concrete examples of the present invention and comparative examples. However, the present invention is not limited to the following examples.

### (Example 1)

In Example 1, a heat resistant structure 61 (a bar for a heat treatment furnace) having a cross-sectional structure shown in Fig. 9 was produced. Specifically, using a 1 mm thick SUS square pipe (19 mm × 19 mm × 700 mm) as a shell material 3, two 2D-C/C composite members 64 (product number "CX-761", rectangular bar (17 mm × 8.5 mm × 700 mm), manufactured by Toyo Tanso Co., Ltd.) were inserted into the SUS square pipe, thus obtaining a heat resistant structure 61. The direction of a load is the direction shown by the arrow O in the figure.

### (Example 2)

In Example 2, a heat resistant structure 1 (a bar for a heat treatment furnace) having a cross-sectional structure shown in Fig. 1 was produced. Specifically, four 2D-C/C composite members 4 (product number "CX-761", rectangular bar (17 mm × 4.25 mm × 700 mm), manufactured by Toyo Tanso Co., Ltd.) were inserted into a SUS square pipe of the same type as in Example 1, thus obtaining a heat resistant structure 1.

### (Example 3)

In Example 3, a heat resistant structure 1A (a bar for a heat treatment furnace) having a cross-sectional structure shown in Fig. 2 was produced. Specifically, two 2D-C/C composite members 4A (product number "CX-761", rectangular bar (17 mm × 4.25 mm × 700 mm), manufactured by Toyo Tanso Co., Ltd.) and four 2D-C/C composite members 4B (product number "CX-761", rectangular bar (17 mm × 2.125 mm × 700 mm), manufactured by Toyo Tanso Co., Ltd.) were inserted into a SUS square pipe of the same type as in Example 1, thus obtaining a heat resistant structure 1A.

### (Example 4)

In Example 4, a heat resistant structure 71 (a bar for a heat treatment furnace) having a cross-sectional structure shown in Fig. 10 was produced. Specifically, eight 2D-C/C composite members 74 (product number "CX-761", rectangular bar (17 mm × 2.125 mm × 700 mm), manufactured by Toyo Tanso Co., Ltd.) were inserted into a SUS square pipe of the same type as in Example 1, thus obtaining a heat resistant structure 71.

### (Example 5)

In Example 5, a heat resistant structure 31 (a bar for a heat treatment furnace) having a cross-sectional structure shown in Fig. 5 was produced. Specifically, a single 2D-C/C composite member 34A (product number "CX-761", square bar (8.5 mm × 8.5 mm × 700 mm), manufactured by Toyo Tanso Co., Ltd.) and four 2D-C/C composite members 34B to 34E (product number "CX-761", rectangular bar (12.75 mm × 4.25 mm × 700 mm), manufactured by Toyo Tanso Co., Ltd.) were inserted into a SUS square pipe of the same type as in Example 1, thus obtaining a heat resistant structure 31.

### (Example 6)

In Example 6, a heat resistant structure 41 (a bar for a heat treatment furnace) having a cross-sectional structure shown in Fig. 6 was produced. Specifically, two 2D-C/C composite members 44 (product number "CX-761", rectangular bar (17 mm × 8.5 mm × 700 mm), manufactured by Toyo Tanso Co., Ltd.) were inserted into a SUS square pipe of the same type as in Example 1, thus obtaining a heat resistant structure 41.

### (Example 7)

In Example 7, a heat resistant structure 21 (a bar for a heat treatment furnace) having a cross-sectional structure shown in Fig. 4 was produced. Specifically, four 2D-C/C composite members 24A to 24D (product number "CX-761", square bar (8.5 mm × 8.5 mm × 700 mm), manufactured by Toyo Tanso Co., Ltd.) were inserted into a SUS square pipe of the same type as in Example 1, thus obtaining a heat resistant structure 21.

### (Example 8)

In Example 8, a heat resistant structure 81 (a bar for a heat treatment furnace) having a cross-sectional structure shown in Fig. 11 was produced. Specifically, eight 2D-C/C composite members 84 (product number "CX-761", rectangular bar (8.5 mm × 4.25 mm × 700 mm), manufactured by Toyo Tanso Co., Ltd.) were inserted into a SUS square pipe of the same type as in Example 1, thus obtaining a heat resistant structure 81.

### (Example 9)

In Example 9, a heat resistant structure 91 (a bar for a heat treatment furnace) having a cross-sectional structure shown in Fig. 12 was produced. Specifically, two 2D-C/C composite members 94A (product number "CX-761", rectangular bar (17 mm × 4.25 mm × 700 mm), manufactured by Toyo Tanso Co., Ltd.) and four 2D-C/C composite members 94B (product number "CX-761", rectangular bar (8.5 mm × 4.25 mm × 700 mm), manufactured by Toyo Tanso Co., Ltd.) were inserted into a SUS square pipe of the same type as in Example 1, thus obtaining a heat resistant structure 91.

### (Example 10)

In Example 10, a heat resistant structure 101 (a bar for a heat treatment furnace) having a cross-sectional structure shown in Fig. 13 was produced. Specifically, two 2D-C/C composite members 104A (product number "CX-761", rectangular bar (17 mm × 4.25 mm × 700 mm), manufactured by Toyo Tanso Co., Ltd.) and four 2D-C/C composite members 104B (product number "CX-761", rectangular bar (8.5 mm × 4.25 mm × 700 mm), manufactured by Toyo Tanso Co., Ltd.) were inserted into a SUS square pipe of the same type as in Example 1, thus obtaining a heat resistant structure 101.

### (Example 11)

In Example 11, a heat resistant structure 111 (a bar for a heat treatment furnace) having a cross-sectional structure shown in Fig. 14 was produced. Specifically, two 2D-C/C composite members 114A (product number "CX-761", rectangular bar (17 mm × 4.25 mm × 700 mm), manufactured by Toyo Tanso Co., Ltd.) and four 2D-C/C composite members 114B (product number "CX-761", rectangular bar (8.5 mm × 2.125 mm × 700 mm), manufactured by Toyo Tanso Co., Ltd.) were inserted into a SUS square pipe of the same type as in Example 1, thus obtaining a heat resistant structure 111.

### (Reference Example 1)

In Reference Example 1, a heat resistant structure 121 (a bar for a heat treatment furnace) having a cross-sectional structure shown in Fig. 15 was produced. Specifically, a single 2D-C/C composite member 124 (product number "CX-761", square bar (17 mm × 17 mm × 700 mm), manufactured by Toyo Tanso Co., Ltd.) was inserted into a SUS square pipe of the same type as in Example 1, thus obtaining a heat resistant structure 121.

### (Comparative Example 1)

In Comparative Example 1, a SUS square bar (19 mm × 19 mm × 700 mm) with no 2D-C/C composite member inserted was used.

### [Evaluations]

Each of the structures in Examples 1 to 11, Reference Example 1, and Comparative Example 1 was heated at 900°C for five hours in an electric furnace in a state where it was supported at both ends with a span of 600 mm and in the direction of a load and a 30 kg weight was hung from the center of the structure. After the structure was cooled, the weight was removed from the structure and the amount of deflection of the structure was measured.

The results are shown in Table 1 below. As for Examples 1 to 11, Table 1 further shows the ratio (L1/L2) between the length L1 of the longest side of the C/C composite member along the direction X of application of a load and the length L2 of the inner periphery of the shell material along the direction X of application of a load. As for Examples 5 and 9 to 11, Table 1 still further shows the ratio (L3/L2) between the length L3 of the second longest side of the C/C composite member along the direction X of application of a load and the length L2 of the inner periphery of the shell material along the direction X of application of a load.

**[Table 1]**

| | Structural View | Ratio(L1/L2) | Ratio(L3/L2) | 30 kg Load Deflection (mm) |
|---|---|---|---|---|
| Ex.1 | Fig. 9 | 1 | - | 2.2 |
| Ex.2 | Fig. 1 | 1 | - | 2.6 |
| Ex.3 | Fig. 2 | 1 | - | 2.3 |
| Ex.4 | Fig. 10 | 1 | - | 2.2 |
| Ex.5 | Fig. 5 | 0.75 | 0.5 | 7.8 |
| Ex.6 | Fig. 6 | 0.5 | - | 9.0 |
| Ex.7 | Fig. 4 | 0.5 | - | 8.9 |
| Ex.8 | Fig. 11 | 0.5 | - | 9.0 |
| Ex.9 | Fig. 12 | 1 | 0.25 | 4.1 |
| Ex.10 | Fig. 13 | 1 | 0.5 | 2.2 |
| Ex.11 | Fig. 14 | 0.5 | 0.25 | 14.5 |
| Ref. Ex.1 | Fig. 15 | - | - | 1.8 |
| Comp. Ex.1 | - | - | - | 30.9 |

As is obvious from Table 1, it was confirmed that the heat resistant structures obtained in Examples 1 to 11 were more excellent in mechanical properties under high-temperature environment and less susceptible to thermal deformation as compared to the SUS square bar in Comparative Example 1. Particularly, as for Examples 1 to 4 where the ratio (L1/L2) was 1, it was confirmed that substantially equivalent mechanical properties were obtained as compared to Reference Example 1 where a single 2D-C/C composite member 124 large in thickness was used.

### Reference Signs List

1, 1A, 1B, 21, 31, 41, 51, 61, 71, 81, 91, 101, 111, 121 ... heat resistant structure
1a ... principal surface
2 ... core
2a ... surface
2b, 2c ... end surface
3 ... shell material
4, 4A, 4B, 24Ato 24D, 34Ato 34E, 44, 64, 74, 84, 94A, 94B, 104A,
104B, 114A, 114B, 124 ... C/C composite member
4a ... side

## Claims

1. A heat resistant structure comprising:
a core formed of a plurality of C/C composite members; and
a shell material covering at least a portion of a surface of the core and made of metal.

2. The heat resistant structure according to claim 1, wherein the core is a layered material comprising the plurality of C/C composite members.

3. The heat resistant structure according to claim 1 or 2, wherein the C/C composite member has an approximately rectangular sheet-like shape.

4. The heat resistant structure according to any one of claims 1 to 3, wherein the C/C composite member is a two-dimensional C/C composite member.

5. The heat resistant structure according to any one of claims 1 to 4, wherein the C/C composite member is disposed so that, in terms of application of a load to the heat resistant structure, a direction of extension of a longest side of a cross section of the C/C composite member taken along a widthwise direction thereof is substantially the same direction as a direction of the application of the load.

6. The heat resistant structure according to any one of claims 1 to 5, wherein the plurality of C/C composite members are layered, in terms of application of a load to the heat resistant structure, in a direction approximately orthogonal to a direction of the application of the load.

7. The heat resistant structure according to any one of claims 1 to 6, wherein
the shell material is a pipe made of metal, and
the plurality of C/C composite members are filled in the pipe.

8. The heat resistant structure according to claim 7, wherein the pipe has an approximately polygonal cross-sectional shape.

9. The heat resistant structure according to claim 7, wherein the pipe has an approximately circular cross-sectional shape.

10. The heat resistant structure according to any one of claims 7 to 9, wherein the pipe has a thickness of not less than 0.1 mm and not more than 3 mm.

11. The heat resistant structure according to any one of claims 7 to 10, wherein a filling rate of the C/C composite members in the pipe is 70% or more.

12. The heat resistant structure according to any one of claims 1 to 6, wherein the shell material partly covers the surface of the core.

13. The heat resistant structure according to any one of claims 1 to 12, being used under a non-oxidizing atmosphere.

14. A member for a heat treatment furnace, the member comprising the heat resistant structure according to any one of claims 1 to 13.
